# EUROPEAN PATENT APPLICATION

(11) **EP 4 753 236 A1**
(43) Date of publication of application: **03.06.2026**
(21) Application number: 24858096.1
(22) Date of filing: 12.07.2024
(51) Int. Cl.: H04L 67/12, H04L 69/06, H04L 47/43, H04L 69/16, H04L 69/22, H04L 69/323

(54) **DATA TRANSMISSION METHOD, AND CHIP AND STORAGE MEDIUM**

(30) Priority: 25.08.2023 WO PCT/CN2023/115046; 26.12.2023 WO PCT/CN2023/142094; 09.02.2024 WO PCT/CN2024/077134; 09.02.2024 WO PCT/CN2024/077133
(71) Applicant: Shenzhen Goodix Technology Co., Ltd., Shenzhen, Guangdong 518045 (CN)
(72) Inventor: WANG, Jihui, Shenzhen, Guangdong 518045 (CN); YANG, Chunmei, Shenzhen, Guangdong 518045 (CN); DAI, Xuewei, Shenzhen, Guangdong 518045 (CN); MAO, Jian, Shenzhen, Guangdong 518045 (CN); YU, Xinhua, Shenzhen, Guangdong 518045 (CN)
(74) Representative: Kraus & Lederer PartGmbB
(86) International application number: PCT/CN2024/105328
(87) International publication number: WO 2025/044552

(57) **Abstract**

Embodiments of the present disclosure relate to the field of data processing, and particularly relate to a method for data transmission, a chip, and a storage medium, wherein the method is applied to a target node, and comprises: receiving, in a process of receiving a target data packet, indication data in any one target data set among at least one data set in the target data packet, then determining whether the indication data satisfies a matching condition; updating the target data set in response to the indication data satisfying the matching condition; and normally receiving the target data set in response to the indication data failing to satisfy the matching condition. With this solution, the target node can determine whether to update the target data set simply by caching the indication data, and update, after determining to update the target data set, the target data set in the process of receiving the target data packet, without the need to cache data other than the indication data, so as to quickly and efficiently implement data transmission based on the target node, thereby reducing the data transmission latency based on the target node.

## Description

The present disclosure claims priority to a PCT patent application with a filing date of 25 August 2023, an application number of "PCT/CN2023/115046" and a patent title of "DATA FORWARDING METHOD, CHIP, AND ELECTRONIC DEVICE," claims priority to a PCT patent application with a filing date of 26 December 2023, an application number of "PCT/CN2023/142094" and a patent title of "METHOD FOR TRANSMITTING NETWORK DATA, CHIP, AND COMMUNICATION SYSTEM," claims priority to a PCT patent application with a filing date of 9 February 2024, an application number of "PCT/CN2024/077133" and a patent title of "METHOD FOR DATA TRANSMISSION, CHIP, AND STORAGE MEDIUM," and claims priority to a PCT patent application with a filing date of 9 February 2024, an application number of "PCT/CN2024/077134" and a patent title of "CHIP, NETWORK SYSTEM, AND ECTRONIC DEVICE," the entire contents of which are incorporated herein by reference.

### TECHNICAL FIELD

Embodiments of the present disclosure relate to the field of data processing, and particularly relate to a method for data transmission, a chip, and a storage medium.

### BACKGROUND

As a vehicle becomes increasingly intelligent, the number of electronic control units (ECUs) within the vehicle continues to grow, and data transmission within the vehicle is implemented through communication among these units.

At present, each of the electronic control units, when serving as a recipient of data transmission and after receiving a complete data packet, usually caches and parses the data packet, and then processes the parsed data packet, to obtain a processed data packet.

However, after receiving the complete data packet, the electronic control unit needs to cache and parse the data packet, and then process the parsed data packet, thereby introducing a complex data transmission workflow among different electronic control units, and resulting in a large latency in data transmission based on the electronic control units.

### SUMMARY

In view of the above, embodiments of the present disclosure provide a method for data transmission, a chip, and a storage medium, to at least partially solve the above problems.

According to an embodiment in a first aspect of the present disclosure, a method for data transmission is provided, wherein the method is applied to a target node, and comprises: receiving, in a process of receiving a target data packet, indication data in any one target data set among at least one data set in the target data packet, then determining whether the indication data satisfies a matching condition; updating the target data set in response to the indication data satisfying the matching condition; and normally receiving the target data set in response to the indication data failing to satisfy the matching condition.

According to an embodiment in a second aspect of the present disclosure, a chip is provided, comprising: a processor and a memory, wherein the processor and the memory communicate with each other; and the memory is configured to store at least one executable instruction, and the executable instruction enables the processor to implement operations corresponding to the above first aspect.

According to an embodiment in a third aspect of the present disclosure, a computer storage medium is provided, storing a computer program thereon, wherein the program, when executed by a processor, implements the method in the above first aspect.

According to the data transmission solutions provided in the embodiments of the present disclosure, in a process of receiving a target data packet, a target node only needs to receive indication data in a target data set in the target data packet, then starts to cache the indication data, determines whether the indication data satisfies a matching condition, updates the target data set in response to the indication data satisfying the matching condition; and normally receives the target data set in response to the indication data failing to satisfy the matching condition. Therefore, the target data set in the target data packet comprises the indication data. After receiving the indication data, the target node can determine whether the target node needs to update the current target data set simply by determining whether the indication data satisfies the matching condition. In other words, in an actual process of receiving the entire target data set, whether to update the target data set can be determined simply by caching and parsing the indication data in the target data set, without the need to completely cache and parse all data in the entire target data set. After determining to update the target data set, the target node can update the target data set in the process of receiving the target data packet. Compared to the related art whereby the target node can determine whether to update the target data set only after receiving and caching the entire target data packet, and then update the target data set after determining to update the target data set, the target node in the embodiments of the present disclosure can determine whether to update the target data set simply by caching and parsing the indication data, and then update the target data set in the process of receiving the target data packet after determining to update the target data set, without the need to cache data other than the indication data, so as to quickly and efficiently implement data transmission based on the target node, thereby reducing the data transmission latency based on the target node.

### BRIEF DESCRIPTION OF DRAWINGS

To more clearly describe technical solutions of embodiments of the present disclosure or the prior art, drawings required to be used in the description of the embodiments or the prior art will be briefly introduced below. Apparently, the drawings in the description below are merely some embodiments disclosed in the embodiments of the present disclosure. For those of ordinary skills in the art, other drawings may also be obtained based on these drawings.
FIG. 1 is a flowchart of a method for data transmission according to an embodiment of the present disclosure;
FIG. 2 is a schematic diagram of a target data packet according to an embodiment of the present disclosure;
FIG. 3 is a schematic diagram of a target data set according to an embodiment of the present disclosure;
FIG. 4 is a schematic diagram of a target node connection mode according to another embodiment of the present disclosure;
FIG. 5 is a schematic diagram of a target node connection mode according to an embodiment of the present disclosure;
FIG. 6 is a schematic diagram of a transmission system according to an embodiment of the present disclosure;
FIG. 7 is a schematic diagram of a transmission system according to another embodiment of the present disclosure;
FIG. 8 is a schematic diagram of a transmission system according to still another embodiment of the present disclosure; and
FIG. 9 is a schematic block diagram of a chip according to an embodiment of the present disclosure.

### DETAILED DESCRIPTION

### Application scenario of the present disclosure

An embodiment of the present disclosure presents a data transmission solution. The entire data transmission solution is relatively universal, and can be used for data transmission among a plurality of nodes, such as data transmission among different nodes in a network system in a vehicle scenario. In addition, the data transmission solutions in the embodiments of the present disclosure are not limited to application to a network system in a vehicle scenario, and may also be applied to other scenarios.

### Method for data transmission

An embodiment of the present disclosure provides a method for data transmission, which is detailed below with reference to a plurality of embodiments.

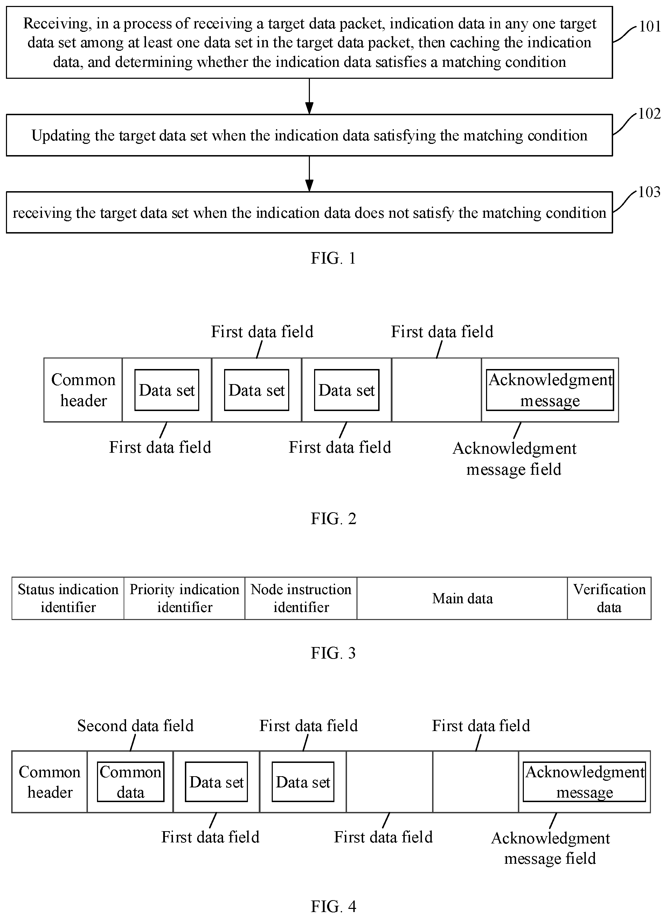

FIG. 1 is a flowchart of a method for data transmission according to an embodiment of the present disclosure. The method for data transmission is applied to a target node. As shown in FIG. 1, the method for data transmission comprises steps below:
Step 101: receiving, in a process of receiving a target data packet, indication data included in any one target data set among at least one data set included in the target data packet, then determining whether the indication data satisfies a matching condition.

The target data packet comprises at least one data set, and the target data set is any one data set included in the target data packet. The data packet format of the target data packet is as shown in FIG. 2. The target data packet comprises at least one first data field, and each first data field is used to load a data set. The target data set is a data set loaded in any one first data field. The first data field used to load the target data set is used for transmission among different nodes to transmit the target data set. It should be understood that the data field is a region in a data unit such as a data packet or a data frame, is used to carry data, and usually has, e.g., a particular length or format. The embodiments of the present disclosure do not impose any limitation on the length or format of the data field.

A destination node of the target data set obtains data included in the target data set from the first data field used to load the target data set, and processes a connected external device and/or local module based on the data, for example, performs a read or write operation on the connected external device and/or local module based on the data in the target data set. The external device may be, e.g., a Local Interconnect Network (LIN) bus external device, a Pulse Width Modulation (PWM) drive device, an Inter-Integrated Circuit (I2C) bus external device, a Serial Peripheral Interface (SPI) bus external device, a Quad Serial Peripheral Interface (QSPI) bus external device, a General-purpose input/output (GPIO) external device, an Ethernet external device, a Controller Area Network (CAN) bus external device, an external device with a Media Independent Interface (MII) and external devices with various extensions and derivatives of the MII, a Universal Asynchronous Receiver/Transmitter (UATI) external device, a Single Edge Nibble Transmission (SENT) bus external device, an external device supporting Peripheral Sensor Interface 5 (PSIS) protocol, an Inter-IC Sound (I2S) external device, a Time-Division Multiplexing (TDM) external device, an Analog Microphone (AMIC) external device, a Digital Microphone (DMIC) external device, an Analog-to-digital converter (ADC) external device, or a Digital Signal Processor (DSP), and the local module may be a register arranged within the target node, which are not limited in the embodiments of the present disclosure.

The indication data included in the target data set is located at a front-ranking position in the target data set. For example, the indication data included in the target data set is located at a header of the target data set. The indication data can be used to indicate key information of the target data set. For example, the indication data is used to indicate key information such as whether the first data field where the target data set is located is idle, a priority of the target data set, and/or a destination node of the target data set. The matching condition is a condition used to indicate updating the target data set, such as a condition used to indicate modifying data in the target data set, deleting data in the target data set, or adding data to the target data set. It should be understood that the indication data is used to indicate whether the first data field where the target data set is located is idle. If the first data field is idle, it means that the node is allowed to write new data into the first data field where the target data set is located, or the node is allowed to replace original data in the first data field where the target data set is located with new data. That is, the first data field being idle may mean that no data is present in the first data field or may mean that the data in the target data set is invalid data.

In a specific embodiment, in the process of receiving the target data packet, the target node can gradually receive the target data packet from beginning to end, and then sequentially receive a data set in each first data field included in the target data packet. When receiving the target data set, the target node can determine whether the target node needs to update the current target data set simply by determining whether the indication data satisfies the matching condition after receiving the indication data included in the target data set. In other words, in an actual process of receiving the entire target data set, only the indication data in the target data set needs to be cached and parsed, without the need to completely cache and parse all data in the entire target data set, thereby greatly reducing the latency in data transmission and processing.

Step 102: updating the target data set in response to the indication data satisfying the matching condition.

In a specific embodiment, after the indication data is identified, if the indication data is identified to satisfy the matching condition, the target data set is updated based on the indication data.

Step 103: normally receiving the target data set in response to the indication data failing to satisfy the matching condition.

In a specific embodiment, after the indication data is identified, if the indication data is identified not to satisfy the matching condition, the target data set is normally received without updating the target data set.

In an embodiment of the present disclosure, in the process of receiving the target data packet, the target node only needs to receive indication data included in the target data set in the target data packet, then starts to cache the indication data, determines whether the indication data satisfies the matching condition, updates the target data set in response to the indication data satisfying the matching condition; and normally/normally receives the target data set in response to the indication data failing to satisfy the matching condition. Therefore, the target data set in the target data packet comprises the indication data. After receiving the indication data, the target node can determine whether the target node needs to update the current target data set simply by determining whether the indication data satisfies the matching condition. In other words, in an actual process of receiving the entire target data set, whether to update the target data set can be determined simply by caching and parsing the indication data in the target data set, without the need to completely cache and parse all data in the entire target data set. After determining to update the target data set, the target node can update the target data set in the process of receiving the target data packet. Compared to the related art whereby the target node can determine whether to update the target data set only after receiving and caching the entire target data packet, and then update the target data set after determining to update the target data set, the target node in the embodiments of the present disclosure can determine whether to update the target data set simply by caching and parsing the indication data, and then update the target data set in the process of receiving the target data packet after determining to update the target data set, without the need to cache data other than the indication data, so as to quickly and efficiently implement data transmission based on the target node, thereby reducing the data transmission latency based on the target node.

In a possible implementation, the target node is an intermediate node among a plurality of nodes used to sequentially transmit data. Based on the above, the method for data transmission further comprises specific processing below: sending the updated target data set to a downstream node of the target node after completing the updating the target data set in response to the indication data satisfying the matching condition; and normally receiving the target data set in response to the indication data failing to satisfy the matching condition, and sending the target data set to the downstream node of the target node.

In an embodiment of the present disclosure, the target node is the intermediate node. In the process of receiving the target data packet, the target node determines whether the indication data satisfies the matching condition simply by receiving the indication data included in the target data set in the target data packet, updates the target data set if the indication data satisfies the matching condition, then sends the updated target data set to the downstream node of the target node, and sends the target data set to the downstream node of the target node if the indication data fails to satisfy the matching condition. Therefore, since the target data set comprises the indication data, the target node can determine whether to update the target data set simply by caching and parsing the indication data. Further, after determining whether to update the target data set, the target node can forward the updated target data set or the target data set to the downstream node in the process of receiving the target data packet, without the need to cache the entire data packet before forwarding. Therefore, the target node can start to forward the target data set in the process of receiving the target data packet, thus implementing streaming data transmission. Compared with the related art whereby only after receiving and caching an entire target data packet, can the target node parse the target data packet, process and packetize the parsed target data packet, and then forward the target data packet, based on the streaming data transmission in the embodiments of the present disclosure, the target node can determine whether to update the target data set simply by caching the indication data in the target data set, and directly forward the updated target data set or the target data set without the need to cache the data other than the indication data, thus implementing streaming data transmission by, in the process of receiving the target data packet, quickly forwarding the target data set thereof. Therefore, the target node in an embodiment of the present disclosure not only can start to forward the data set included in the target data packet in the process of receiving the target data packet, but also can start to determine whether to update the data set in the process of receiving each data set, thereby quickly and efficiently transmitting the target data packet, and reducing the data transmission latency of the target node. It should be understood that the intermediate node does not represent an intermediate node in a physical connection relationship, but in a process of transmitting a target data packet in a data transmission link, all nodes except for a node initiating the transmission of the target data packet and a node ending the transmission of the target data packet are regarded as intermediate nodes.

Optionally, the indication data may comprise a state indication identifier used to indicate whether the first data field where the target data set is located is idle. For example, the state indication identifier may be 1 or 0, wherein 1 is used to indicate that the first data field where the target data set is located is not idle, and 0 is used to indicate that the first data field where the target data set is located is idle. It should be understood that the state indication identifier is used to indicate whether the first data field where the target data set is located is idle. If the first data field is idle, it means that the node is allowed to write new data into the first data field where the state indication identifier is located, or the node is allowed to replace the original data in the first data field where the state indication identifier is located with new data. That is, the first data field being idle may mean that no data is present in the first data field or may mean that the data in the target data set is invalid data.

Optionally, the indication data may further comprise a node indication identifier used to indicate a destination node of the target data set. For example, the node indication identifier may be a node number of the destination node of the target data set.

Based on the above:
In a possible implementation, the determining whether the indication data satisfies the matching condition in the above step 101 may comprise specific processing below:
determining that the indication data satisfies the matching condition in response to a state indication identifier included in the indication data indicating that a data field used to load the target data set is not idle and a node indicated by a node indication identifier included in the indication data being the target node; determining that the indication data fails to satisfy the matching condition in response to the state indication identifier indicating that the data field used to load the target data set is not idle and the node indicated by the node indication identifier included in the indication data not being the target node; determining that the indication data satisfies the matching condition in response to the state indication identifier indicating that the data field used to load the target data set is idle and the target node obtaining to-be-transmitted data from an external device connected to the target node and/or a local module included in the target node; and determining that the indication data fails to satisfy the matching condition in response to the state indication identifier indicating that the data field used to load the target data set is not idle and the target node failing to obtain the to-be-transmitted data from the external device and/or the local module.

Based on the above target data packet comprising at least one first data field used to load the data set, the data field used to load the target data set is the first data field where the target data set is located.

In an embodiment of the present disclosure, the indication data comprises the state indication identifier and the node indication identifier. The target node determines whether the indication data satisfies the matching condition based on the status indication identifier, the node indication identifier, and whether the to-be-transmitted data is obtained. Therefore, the target node can determine whether the indication data satisfies the matching condition based on the state indication identifier and the node indication identifier in the received indication data, and whether the to-be-transmitted data is obtained, and then determine whether to update the target data set. Therefore, after the indication data in the target data set is received, whether to update the target data set can be determined without the need to completely receive the target data set, thereby reducing the transmission latency of the target data set.

Optionally, the indication data may further comprise, e.g., a priority indication identifier used to indicate, after the destination node of the target data set obtains the data included in the target data set, a processing priority of processing based on the data, and/or used to indicate a priority of adding the target data set to the first data field. The embodiments of the present disclosure do not impose any limitation on specific data included in the indication data.

Based on the status indication identifier, the priority indication identifier, and the node indication identifier included in the indication data, it usually takes 3-4 cache line units for the target node to complete the process from receiving the target data set to sending the target data set or the updated target data set to the downstream node. As an example, a sum of a data length of the state indication identifier and a data length of the priority indication identifier included in the indication data is almost equal to a data length of the node indication identifier. It usually takes 3 cache line units for the target node to complete the process from receiving the target data set to sending the target data set or the updated target data set to the downstream node. Within the first cache line unit, the indication data comprising the status indication identifier, the priority indication identifier, and the node indication identifier can be received; within the second cache line unit, the received state indication identifier and priority indication identifier can be identified; and within the third cache line unit, the received node indication identifier can be identified. In this case, the target data set has usually been received, and based on the identification result, the target data set can be updated and sent to the downstream node, or the target data set can be sent to the downstream node. Since the time for updating the target data set is negligible compared to the cache line unit, it usually takes 3 cache line units for the target node to complete the process from receiving the target data set to sending the target data set or the updated target data set to the downstream node, wherein the cache line unit is usually 60-80 nanoseconds. Therefore, it generally takes no more than 240 nanoseconds for the target node to complete the process from receiving the target data set to sending the target data set or the updated target data set to the downstream node, thereby quickly transmitting the target data set, and quickly transmitting the target data packet.

Further, a forwarding latency of the target data packet depends on a maximum forwarding latency of a data set therein. Since a forwarding latency of the target data set generally does not exceed 240 nanoseconds, a forwarding latency of the entire target data packet generally does not exceed 240 nanoseconds.

It should be noted that the above latency of 240 nanoseconds is a forwarding latency in data forwarding within the target node, and neither comprises a latency in data transmission between an upstream node and the target node outside the target node, nor comprises a latency in data transmission between the target node and a downstream node outside the target node.

Optionally, the target data set may comprise the indication data and main data/payload data. For example, as shown in FIG. 3, the target data set comprises the indication data and the main data, with the main data following the indication data. The embodiments of the present disclosure do not impose any limitation on sort order of the indication data and the main data in the target data set. The main data is, for example, to-be-processed data or data used to indicate corresponding processing. The to-be-processed data may be to-be-played or to-be-displayed video data. If the main data is the to-be-processed data, the target node of the target data set can, after obtaining the data included in the target data set, process the main data among the data, such as playing the video data. The data used to indicate corresponding processing may be, e.g., command data or control data. If the main data is the data used to indicate corresponding processing, the destination node of the target data set can, after obtaining the data included in the target data set, perform corresponding processing based on the main data among the data, such as implementing an operation corresponding to the command data.

Data types of the main data include, for example, any one of Local Interconnect Network (LIN) bus data, Pulse Width Modulation (PWM) data, Inter-Integrated Circuit (I2C) bus data, Serial Peripheral Interface (SPI) bus data, Quad Serial Peripheral Interface (QSPI) bus data, General-purpose input/output (GPIO) data, Ethernet data, Controller Area Network (CAN) bus data, Media Independent Interface (MII) data and data of various extensions and derivatives of media independent interface, Universal Asynchronous Receiver/Transmitter (UART) data, Single Edge Nibble Transmission (SENT) bus data, Peripheral Sensor Interface 5 (PSIS) protocol data, Inter-IC Sound (I2S) bus data, Time-Division Multiplexing (TDM) data, Analog Microphone (AMIC) data, Digital Microphone (DMIC) data, Analog-to-digital converter (ADC) data, and Digital Signal Processing (DSP) data. Main data in different data sets in a same data packet may be of a same data type, or may be of different data types, which is not limited in the embodiments of the present disclosure.

In a possible implementation, based on the fact that the target node is an intermediate node among a plurality of nodes used to sequentially transmit data, the updating the target data set in the above step 102 may comprise specific processing below:
obtaining data included in the target data set in response to the state indication identifier indicating that the data field used to load the target data set is not idle, the node indicated by the node indication identifier being the target node, and the target node obtaining the to-be-transmitted data from the external device and/or the local module and after receiving the target data set, replacing main data in the target data set with at least a portion of the to-be-transmitted data, and updating the indication data included in the target data set.

In a specific embodiment, in the process of identifying the indication data, if the target node identifies that the state indication identifier indicates that the data field used to load the target data set is not idle, the node indicated by the node indication identifier is the target node, and the target node obtains the to-be-transmitted data from the external device connected to the target node and/or the local module, it means that the first data field where the target data set is located is not idle, the destination node of the target data set is the target node, and the to-be-transmitted data is present in the target node. In this case, after receiving the target data set, the target node can read the data included in the target data set from the first data field where the target data set is located, to obtain the data included in the target data set, then replace the main data in the first data field where the target data set is located with at least a portion of the to-be-transmitted data to update the main data, and then modify the node indication identifier and the priority indication identifier in the first data field where the target data set is located based on the updated main data, to complete updating the target data set.

In an embodiment of the present disclosure, after receiving the indication data, if the target node identifies that the indication data is used to indicate that the first data field where the target data set is located is not idle, the destination node of the target data set is the target node, and the to-be-transmitted data is present in the target node, the target node can, after receiving the target data set, obtain the data included in the target data set, and update the target data set based on the to-be-transmitted data, without the need to delete the target data set or mark the first data field where the target data group is located as idle before updating, thereby reducing the latency in updating the target data set by the target node.

In a possible implementation, based on the fact that the target node is an intermediate node among a plurality of nodes used to sequentially transmit data, the updating the target data set in the above step 102 may comprise specific processing below:
obtaining data included in the target data set in response to the state indication identifier indicating that the data field used to load the target data set is not idle, the node indicated by the node indication identifier being the target node, and the target node failing to obtain the to-be-transmitted data from the external device and/or the local module and after receiving the target data set, and adjusting the state indication identifier in the target data set to indicate that the data field used to load the target data set is idle.

In a specific embodiment, in the process of identifying the indication data, if the target node identifies that the state indication identifier indicates that the data field used to load the target data set is not idle, the node indicated by the node indication identifier is the target node, and the target node fails to obtain the to-be-transmitted data from the external device connected to the target node and/or the local module, it means that the first data field where the target data set is located is not idle, the destination node of the target data set is the target node, and the to-be-transmitted data is not present in the target node. In this case, after receiving the target data set, the target node can read the data included in the target data set from the first data field where the target data set is located, to obtain the data included in the target data set, then modify the state indication identifier in the first data field where the target data set is located, so that the modified state indication identifier indicates that the first data field where the target data set is located is idle, to complete updating the target data set.

In an embodiment of the present disclosure, after receiving the indication data, if the target node identifies that the indication data is used to indicate that the first data field where the target data set is located is not idle, the destination node of the target data set is the target node, and the to-be-transmitted data is not present in the target node, the target node can, after receiving the target data set, obtain the data included in the target data set, adjust the state indication identifier in the target data set to indicate that the first data field where the target data set is located is idle, and then directly modify the state indication identifier after obtaining the data included in the target data set, without the need to delete the target data set in the first data field where the target data set is located, wherein the data size of the state indication identifier is relatively small, thereby reducing the latency in updating the target data set by the target node.

In a possible implementation, based on the fact that the target node is an intermediate node among a plurality of nodes used to sequentially transmit data, the updating the target data set in the above step 102 may comprise specific processing below:
generating the updated target data set in the data field used to load the target data set in response to the state indication identifier indicating that the data field used to load the target data set is idle and obtaining the to-be-transmitted data from the external device and/or the local module, wherein main data included in the updated target data set is at least a portion of the to-be-transmitted data, and indication data included in the updated target data set is determined based on the main data included in the updated target data set.

In a specific embodiment, in the process of identifying the indication data, if the target node identifies that the state indication identifier indicates that the data field used to load the target data set is idle, and the target node obtains the to-be-transmitted data from the external device connected to the target node and/or the local module, it means that the first data field where the target data set is located is idle, and the to-be-transmitted data is present in the target node. In this case, the target node can load at least a portion of the to-be-transmitted data into the first data field, so as to use at least the portion of the to-be-transmitted data as the main data of the data set loaded in the first data field, then update the indication data of the data set loaded in the first data field based on at least the portion of the to-be-transmitted data, so as to generate the updated target data set in the first data field. Based on the above, the main data of the updated target data set is at least the portion of the to-be-transmitted data loaded into the first data field, and indication data of the updated target data set is the updated indication data in the first data field.

In an embodiment of the present disclosure, after receiving the indication data, if the target node identifies that the indication data is used to indicate that the first data field where the target data set is located is idle and the to-be-transmitted data is present in the target node, the target node can directly generate the updated target data set in the first data field based on at least the portion of the to-be-transmitted data, without the need to clear the target data set in the first data field and then reload the updated target data set, thereby reducing the latency in updating the target data set by the target node.

In a possible implementation, the target node is a terminal node among a plurality of nodes used to sequentially transmit data. Based on the above, the target node does not have a downstream node. It should be understood that the terminal node represents a node that ends, in a process of transmitting a target data packet in a data transmission link, transmission of the target data packet.

In a possible implementation, based on the fact that the target node is the terminal node among the plurality of nodes used to sequentially transmit data, the determining whether the indication data satisfies the matching condition in the above step 101 may comprise specific processing below: determining that the indication data satisfies the matching condition in response to a state indication identifier included in the indication data indicating that a data field used to load the target data set is not idle and a node indicated by a node indication identifier included in the indication data being the target node; determining that the indication data fails to satisfy the matching condition in response to the state indication identifier indicating that the data field used to load the target data set is not idle and the node indicated by the node indication identifier included in the indication data not being the target node; and determining that the indication data fails to satisfy the matching condition in response to the state indication identifier indicating that the data field used to load the target data set is idle.

In an embodiment of the present disclosure, the indication data comprises the state indication identifier and the node indication identifier. The target node determines whether the indication data satisfies the matching condition based on the state indication identifier and the node indication identifier. Therefore, the target node can determine whether the indication data satisfies the matching condition based on the state indication identifier and the node indication identifier in the received indication data, and then determine whether to update the target data set. Therefore, after the indication data in the target data set is received, whether to update the target data set can be determined without the need to completely receive the target data set, thereby reducing the transmission latency of the target data set.

In a possible implementation, based on the fact that the target node is the terminal node among the plurality of nodes used to sequentially transmit data, the updating the target data set in the above step 102 may comprise specific processing below: obtaining data included in the target data set in response to the state indication identifier indicating that the data field used to load the target data set is not idle and the node indicated by the node indication identifier being the target node and after receiving the target data set, and adjusting the state indication identifier in the target data set to indicate that the data field used to load the target data set is idle.

In a specific embodiment, in the process of identifying the indication data, if the target node identifies that the state indication identifier indicates that the data field used to load the target data set is not idle and the node indicated by the node indication identifier is the target node, it means that the first data field where the target data set is located is not idle, and the destination node of the target data set is the target node. In this case, after receiving the target data set, the target node can read the data included in the target data set from the first data field where the target data set is located, to obtain the data included in the target data set, and then modify the state indication identifier in the first data field where the target data set is located, so that the modified state indication identifier indicates that the first data field where the target data set is located is idle, to complete updating the target data set.

In an embodiment of the present disclosure, after receiving the indication data, if the target node identifies that the indication data is used to indicate that the first data field where the target data set is located is not idle, and the destination node of the target data set is the target node, the target node can, after receiving the target data set, obtain the data included in the target data set, adjust the state indication identifier in the target data set to indicate that the first data field where the target data set is located is idle, and then directly modify the state indication identifier after obtaining the data included in the target data set, without the need to delete the target data set in the first data field where the target data set is located, wherein the data size of the state indication identifier is relatively small, thereby reducing the latency in updating the target data set by the target node.

In another possible implementation, based on the fact that the target node is the terminal node among the plurality of nodes used to sequentially transmit data, the updating the target data set in the above step 102 may further comprise specific processing below: obtaining data included in the target data set in response to the state indication identifier indicating that the data field used to load the target data set is not idle and the node indicated by the node indication identifier being the target node and after receiving the target data set. In other words, only data can be obtained without adjusting the state indication identifier to idle.

In an embodiment of the present disclosure, after receiving the indication data, if the target node identifies that the indication data is used to indicate that the first data field where the target data set is located is not idle, and the destination node of the target data set is the target node, the target node can, after receiving the target data set, obtain the data included in the target data set, so that the state indication identifier is not required to be modified in the first data field where the target data set is located after obtaining the data included in the target data set, thereby reducing the latency in updating the target data set by the target node.

After obtaining the data included in the target data set, the target node will process the data, with at least three specific processing manners below.

In a first possible implementation, the main data comprises preprocessing information and non-preprocessing information. Based on the above, the method for data transmission further comprises: preprocessing the external device and/or the local module based on the preprocessing information included in the main data after obtaining the data included in the target data set, and then processing the external device and/or the local module based on the non-preprocessing information included in the main data, such as data interaction and/or data reading/writing.

In a second possible implementation, the main data comprises non-preprocessing information, and does not comprise preprocessing information. Based on the above, the method for data transmission further comprises: obtaining preprocessing information corresponding to the main data in the target data set from the target node after obtaining the data included in the target data set, preprocessing the external device and/or the local module based on the preprocessing information, and then processing the external device and/or the local module based on the non-preprocessing information included in the main data, such as data interaction and/or data reading/writing.

In a third possible implementation, the main data comprises non-preprocessing information and does not comprise preprocessing information. Based on the above, the method for data transmission further comprises: obtaining the preprocessing information corresponding to each external device and the preprocessing information corresponding to the local module from the target node; preprocessing the external device based on the preprocessing information corresponding to the external device; preprocessing the local module based on the preprocessing information corresponding to the local module; and processing the external device and/or the local module based on the non-preprocessing information included in the main data after obtaining the data included in the target data set, such as data interaction and/or data reading/writing.

It should be noted that in an embodiment of the present disclosure, the "obtaining the preprocessing information corresponding to each external device and the preprocessing information corresponding to the local module from the target node; preprocessing the external device based on the preprocessing information corresponding to the external device; and preprocessing the local module based on the preprocessing information corresponding to the local module" may be performed when the target node is powered on and initialized.

Therefore, compared with the main data comprising preprocessing information, the main data excluding preprocessing information can make the data size of the target data set smaller, thereby reducing the latency in transmitting the target data set, and further improving the bandwidth utilization for transmission of the target data set.

In a possible implementation, both the external device and the local module have corresponding preprocessing information. The preprocessing information corresponding to the external device can be used to, e.g., indicate configuration of the external device or read status of the external device. The preprocessing information corresponding to the local module can be used to, e.g., indicate configuration of the local module or read status of the local module. The preprocessing information corresponding to the external device and the local module is obtained by the target node after it is powered on and is stored locally in the target node. Based on the above, the "obtaining the preprocessing information corresponding to the main data in the target data set from the target node" in the above second implementation may comprise specific processing below:
determining a to-be-processed object of the non-preprocessing information included in the target data set, wherein the to-be-processed object is an object to be processed based on the corresponding non-preprocessing information, and comprises at least a portion of the external device and/or at least a portion of the local module; and locally obtaining the preprocessing information corresponding to the to-be-processed object from the target node, i.e., obtaining preprocessing information corresponding to each external device included in the to-be-processed object and preprocessing information of the local module included in the to-be-processed object, as the preprocessing information corresponding to the main data in the target data set.

In a specific embodiment, after the target node is powered on, the target node locally stores an information group corresponding to each external device and an information group corresponding to the local module. For the information group corresponding to each external device, the information group comprises an identifier of the external device and the preprocessing information corresponding to the external device. The information group corresponding to the local module comprises an identifier of the local module and the preprocessing information corresponding to the local module. Based on the above, in a process of obtaining the preprocessing information corresponding to the main data in the target data set from the target node, the to-be-processed object of the non-preprocessing information included in the target data set may be first determined, then the preprocessing information in the information group where each identifier is located may be locally obtained from the target node based on the identifier of the external device and/or the identifier of the local module included in the to-be-processed object, to obtain the preprocessing information corresponding to the to-be-processed object, and this portion of preprocessing information may be used as the preprocessing information corresponding to the main data in the target data set.

In an embodiment of the present disclosure, the preprocessing information corresponding to the external device and the local module is stored locally in the target node after the target node is powered on. When the preprocessing information corresponding to the main data is obtained, the corresponding preprocessing information can be obtained based on the to-be-processed object corresponding to the non-preprocessing information included in the main data, thereby efficiently obtaining the preprocessing information.

In a possible implementation, the method for data transmission is implemented based on a physical layer of the target node, wherein the physical layer is a bottom layer in network communication. It should be understood that the method for data transmission is implemented based on the physical layer, but it does not mean that it only implements functions implementable by a physical layer defined in a standard protocol. For example, in the standard protocol, the physical layer functions to convert a frame signal of an upper layer (such as a data link layer) than the physical layer into an electrical signal or optical signal transmittable on a physical transmission medium, and convert the electrical signal or optical signal received from the physical transmission medium into a bit stream for processing by the upper layer (such as the data link layer). The method for data transmission in the present disclosure is implemented based on the physical layer of the target node, which means that the method for data transmission in the embodiments of the present disclosure is not implemented through an upper layer (such as the data link layer or a network layer) than the physical layer defined in standard physical communication. Instead, a transmission method is customized based on the physical layer, so that it can implement data processing in addition to some functions implementable by the physical layer defined in the standard protocol. Optionally, the physical transmission medium is a bus such as a twisted pair or a coaxial cable.

In an embodiment of the present disclosure, the method for data transmission is implemented based on the physical layer of the target node. Therefore, the processing and transmission of the target data set are both performed based on the physical layer of the target node. The target data set is sent from the upstream node through the physical layer of the target node, without the need for transmission through a switch, without the need for complex packetization by a microcontroller unit (MCU) of the upstream node, and consequently without the need for complex parsing by a MCU of the target node, thereby reducing the data transmission latency by the target node.

Optionally, the method for data transmission is applied to the physical layer of the target node. As shown in FIG. 4, the target data packet may further comprise a common header. The common header comprises, e.g., a preamble for physical layer-based protocol identification of the target data packet, so that the data packet can be transmitted based on the physical layer of the target node. In addition, the target data packet may further comprise a second data field used to load common data, e.g., audio data or broadcast data, receivable and obtainable by the plurality of nodes or all nodes. In a process of receiving the target data packet, the physical layer of the target node with the downstream node sends, when receiving the common header, the common header to the downstream node, obtains, when receiving the common data loaded in the second data field, the common data from the second data field, and then continues to send the common data loaded in the second data field to the downstream node.

In a possible implementation, the target data packet is sent from a physical layer of an upstream node of the target node to the physical layer of the target node through a first transmission medium, wherein the target node is connected to the upstream node through the first transmission medium. The first transmission medium is a physical transmission medium, such as a coaxial cable or a twisted pair, and the twisted pair may be, e.g., a shielded twisted pair or an unshielded twisted pair.

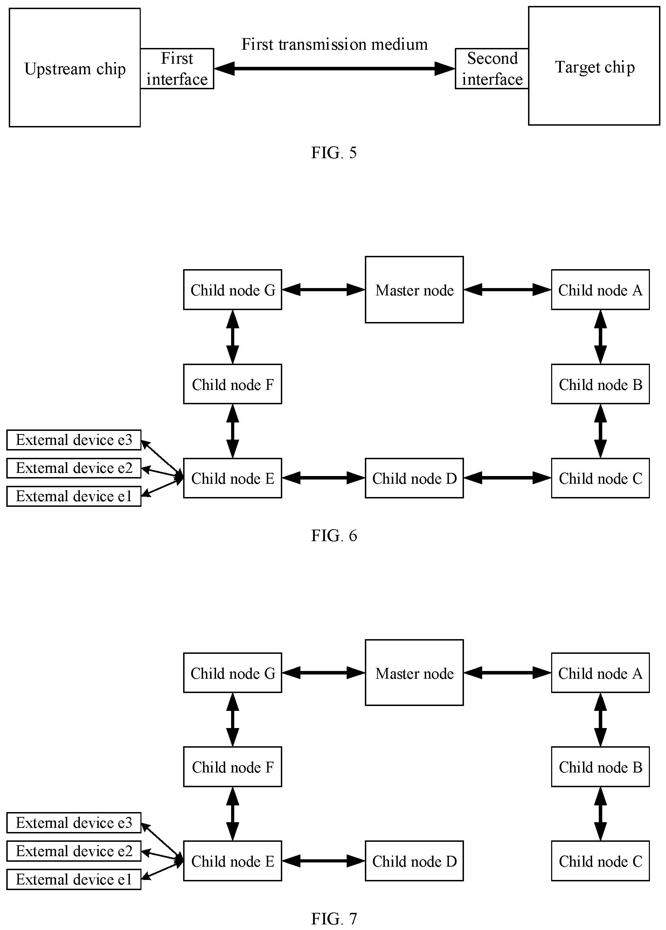

In a specific embodiment, as shown in FIG. 5, the target node is a target chip for data transmission based on the physical layer, and the upstream node is an upstream chip for data transmission based on the physical layer. Based on the above, in a process of receiving the target data packet sent from the upstream chip, the target chip can receive the target data set sent from the upstream chip through the first interface, the first transmission medium used to connect the first interface to the second interface, and the second interface, so that the physical layer of the upstream node of the target node sends the target data packet to the physical layer of the target node through the first transmission medium; wherein the first interface is an interface on the upstream chip for transmitting physical layer data, and the second interface is an interface on the target chip for transmitting the physical layer data. Each of the first interface and the second interface is, for example, a physical layer interface.

In an embodiment of the present disclosure, in a process of receiving the target data packet, the target node receives data sent from the physical layer of the upstream node through the physical layer of the target node. Therefore, the target data packet is transmitted directly based on the physical layer of the upstream node and the physical layer of the target node. Compared with the data set packetization across upper-layer or multi-layer protocols through a MCU external to the physical layer, the target data set does not comprise a plurality of protocol headers, and the main data accounts for a large proportion in the target data set, thereby improving the bandwidth utilization of the target node for data transmission.

In a possible implementation, based on the fact that the target data packet is sent from the physical layer of the upstream node of the target node to the physical layer of the target node through the first transmission medium, the method for data transmission may further comprise specific processing below: checking the target data packet through the physical layer of the target node after the receiving the target data packet is completed; sending, in response to the target data packet passing the check, an acknowledgment message corresponding to the target data packet to the physical layer of the upstream node of the target node through the first transmission medium; and uploading corresponding abnormality information in response to the target data packet failing to pass the verification.

In a specific embodiment, as shown in FIG. 5, the target node is the target chip for data transmission based on the physical layer, and the upstream node is the upstream chip for data transmission based on the physical layer. After the receiving the target data packet is completed, the target chip can check the target data packet, can send, in response to the target data packet passing the check, the acknowledgment message corresponding to the target data packet to the upstream chip through the second interface, the first transmission medium used to connect the first interface to the second interface, and the second interface, so as to send the acknowledgment message corresponding to the target data packet from the physical layer of the target node to the physical layer of the upstream node of the target node through the first transmission medium, and upload, in response to the target data packet failing to pass the check, the corresponding abnormality information to a heartbeat packet for management and maintenance.

For example, the acknowledgment message corresponding to the target data packet may be an Acknowledge character (ACK) message. The ACK message corresponding to the target data packet usually comprises a node identifier of the target node, an index of the target data packet, and Cyclic Redundancy Check (CRC) data of the ACK message.

As shown in FIGS. 2 and 4, the target data packet may further comprise an acknowledgment message field used to load the acknowledgment message, so that an acknowledgment message corresponding to a data packet other than the target data packet can be transmitted through the target data packet.

In addition, a specific embodiment of the above "checking the target data packet after the receiving the target data packet is completed" may be as follows: As shown in FIG. 3, the target data set further comprises check data, and the check data may be CRC data. After the receiving the target data packet is completed, the target node can perform CRC on the target data set based on the CRC data. Based on the above, after the receiving the target data packet is completed, whether each data set included in the target data packet passes the CRC is determined, to complete checking the target data packet.

The target data packet can be determined to pass the check when each data set included in the target data packet passes the CRC, and can be determined to fail to pass the check when a data set among the data sets included in the target data packet fails to pass the CRC. Or, the target data packet can be determined to pass the check when the number of data sets among the data sets included in the target data packet passing the CRC is greater than a preset number, and can be determined to fail to pass the check when the number of data sets among the data sets included in the target data packet passing the CRC is less than or equal to the preset number. The embodiments of the present disclosure neither impose any limitation on the specific value of the preset number, nor impose any limitation on the check pass condition of the target data packet.

In an embodiment of the present disclosure, after the receiving the target data packet is completed, the target data packet is checked through the physical layer of the target node. If the target data packet passes the check, the acknowledgment message corresponding to the target data packet is sent to the physical layer of the upstream node. Otherwise, the acknowledgment message corresponding to the target data packet is not sent. Therefore, after the upstream node sends the target data packet to the target node, whether the target node receives the target data packet passing the check can be determined from the upstream node, which is convenient for problem tracing in case of abnormal transmission of the target data packet.

Based on the fact that the target data packet is sent from the physical layer of the upstream node of the target node to the physical layer of the target node through the first transmission medium, if the target node is an intermediate node among a plurality of nodes used to sequentially transmit data, the target node sends an unupdated or updated target data packet from the physical layer of the target node to the physical layer of the downstream node through a physical transmission medium used to connect the physical layer of the target node to the physical layer of the downstream node.

In a possible implementation, if the target node is an intermediate node among a plurality of nodes used to sequentially transmit data, based on the physical layer of the target node, the unupdated or updated target data packet is sent to the physical layer of the downstream node through the physical transmission medium used to connect the physical layer of the target node to the physical layer of the downstream node. The method for data transmission may further comprise specific processing below: re-sending, in response to failure to receive, after a first waiting duration from sending the target data packet to a physical layer of the downstream node, the acknowledgment message sent for the target data packet from the physical layer of the downstream node, the target data packet to the physical layer of the downstream node, thereby resulting in error-induced retransmission of the target data packet.

In an embodiment of the present disclosure, the error-induced retransmission of the target data packet is based on the physical layer, that is, the error-induced retransmission of the target data packet is performed directly between the physical layer of the target node and the physical layer of the downstream node. Compared with the error-induced retransmission of the target data packet through, e.g., the switch or the MCU, wherein the error-induced retransmission latency is usually at a magnitude of millisecond, the error-induced retransmission based on the physical layer in an embodiment of the present disclosure is at a magnitude of microsecond, thereby reducing the error-induced retransmission latency.

In a possible implementation, if the target node is an intermediate node among a plurality of nodes used to sequentially transmit data, based on the physical layer of the target node, the unupdated or updated target data packet is sent to the physical layer of the downstream node through the physical transmission medium used to connect the physical layer of the target node to the physical layer of the downstream node. The method for data transmission may further comprise specific processing below: discarding, in response to failure to receive, after a second waiting duration from sending the target data packet to a physical layer of the downstream node, the acknowledgment message sent for the target data packet from the physical layer of the downstream node, the target data packet and uploading corresponding abnormality information, for example, discarding the target data packet and uploading an alarm message. The second waiting duration is longer than the first waiting duration, and the embodiments of the present disclosure do not impose any limitation on specific durations of the first waiting duration and the second waiting duration.

In a specific embodiment, the target node can cache and manage a plurality of received data packets in a queue, that is, when the data packets are sent to the physical layer of the downstream node, the plurality of data packets in the queue are sent one by one. The target data packet is any one of the plurality of data packets. Based on the above, if the acknowledgment message sent for the target data packet from the physical layer of the downstream node is not received after the second waiting duration from sending the target data packet to the physical layer of the downstream node, the target data packet in the queue is discarded and the corresponding abnormality information is uploaded, to continue to send a next data packet in the queue, wherein the uploading the corresponding abnormality information may be, e.g., uploading the alarm message.

Therefore, when the acknowledgment message sent for the target data packet from the physical layer of the downstream node remains unreceived after a long duration, the target node can discard the target data packet to spare computing resources, and further reduce the possibility that the transmission process of the target data packet is not completed, thus blocking the transmission of other data packets.

In a possible implementation, if the target node is an intermediate node among a plurality of nodes used to sequentially transmit data, based on the physical layer of the target node, the unupdated or updated target data packet is sent to the physical layer of the downstream node through the physical transmission medium used to connect the physical layer of the target node to the physical layer of the downstream node. The method for data transmission may further comprise specific processing below: checking the acknowledgment message through the physical layer of the target node in response to receiving the acknowledgment message sent for the target data packet from the physical layer of the downstream node within the second waiting duration from sending the target data packet to the physical layer of the downstream node, deleting the target data packet in response to the acknowledgment message passing the check, discarding the target data packet in response to the acknowledgment message failing to pass the check, and uploading corresponding abnormality information, such as uploading the corresponding abnormality information to the heartbeat packet for management and maintenance, wherein the heartbeat packet can help and promptly discover communication anomalies or connection problems. Therefore, after the target data packet forwarding process is completed, the target node can delete the target data packet, to spare computing resources.

In a possible implementation, based on the fact that the target data packet is sent from the physical layer of the upstream node of the target node to the physical layer of the target node through the first transmission medium, the method for data transmission may further comprise specific processing below: deleting, in response to a first data packet of which receipt is started overlapping with any one data packet of which receipt is completed in a process of receiving a plurality of data packets by the physical layer of the target node, the first data packet after the receiving the first data packet is completed, to deduplicate data packets received by the physical layer of the target node. The target data packet is any one data packet among the plurality of data packets, and the first data packet is any one data packet other than the first data packet among the plurality of data packets.

As an example, when the physical layer of the target node is currently in a stage of planning to receive an n-th data packet among the plurality of data packets, if the received first data packet is an m-th data packet among the plurality of data packets, wherein m<n and m is a positive integer, it means that the first data packet is a duplicate of any one data packet of which receipt is completed. In this case, the m-th data packet can be deleted, wherein n>1 and n is a positive integer.

In a possible implementation, based on the fact that the target data packet is sent from the physical layer of the upstream node of the target node to the physical layer of the target node through the first transmission medium, the method for data transmission may further comprise specific processing below: exceptionally receiving, in response to receipt of a third data packet being started after a second data packet is normally received in a process of receiving a plurality of data packets by the physical layer of the target node and the third data packet not being a next data packet to the second data packet among the plurality of data packets, the third data packet, to cache the third data packet and not to process the third data packet, thereby sequentially managing data packets transmitted by the target node. The target data packet is any one data packet among the plurality of data packets, the second data packet is any one data packet among the plurality of data packets, and the third data packet is any one data packet other than the first data packet among the plurality of data packets.

As an example, after the second data packet is normally received, the physical layer of the target node is currently in a stage of planning to receive the next data packet to the second data packet among the plurality of data packets. The next data packet to the second data packet among the plurality of data packets is denoted as an h-th data packet among the plurality of data packets. In this stage, if the received third data packet is a g-th data packet among the plurality of data packets, wherein g>h and g is a positive integer, it means that the third data packet is pre-transmitted to the target node. In this case, the third data packet can be cached and not processed, so that the cached third data packet can be normally received and processed when the physical layer of the target node is in a stage of planning to receive the third data packet, wherein h is a positive integer.

In a possible implementation, the target node is applied to a transmission system, the transmission system comprises a plurality of nodes, and the plurality of nodes comprise a master node and at least one child node. If at least two child nodes are present among the plurality of nodes, the plurality of nodes are sequentially connected to form a first link. The first link is a ring topology or a linear topology, and the target node is an intermediate node or a terminal node transmitting the target data packet in the first link. If one child node is present among the plurality of nodes, the master node is connected to the child node to form a second link, and the child node is a terminal node transmitting the target data packet in the second link. The target node is the child node, that is, the child node serves as the terminal node transmitting the target data packet in the second link.

One node among the plurality of nodes is the master node, and other nodes except for the master node among the plurality of nodes are child nodes. The master node and the child nodes, as well as the child nodes and the child nodes, are connected through the first transmission medium (the first transmission medium is a physical transmission medium, for example, a bus following physical layer communication, such as a twisted pair or a coaxial cable). The master node is connected to a host, and the master node may be connected to the host through a second transmission medium. The second transmission medium comprises any one bus among a plurality of buses, such as SPI, I2C, TDM, USB (Universal Serial Bus), QSPI, MII series, and UART.

Optionally, the host comprises a central processing unit (CPU) or a MCU. The CPU or the MCU is connected to the master node through the SPI bus, and the master node is connected to the child nodes through a physical transmission medium.

Optionally, the host may further comprise a Digital Signal Processing (DSP) unit. The CPU or the MCU is connected to the DSP unit, and the DSP unit is then connected to the master node. For example, the CPU or the MCU is connected to the DSP unit through the I2S bus, and the DSP unit is connected to the chip through a TDM bus. Based on the above, when the host transmits, e.g., audio data to the master node, the data is sent from the CPU or the MCU to the master node through the DSP unit. When the host transmits, e.g., control data to the master node, the control data is sent directly from the CPU or the MCU to the master node through a bus such as the SPI, I2C, or USB.

During transmission of a target data packet in the first link composed of the plurality of nodes, a node initiating the transmission of the target data packet and a node ending the transmission of the target data packet may be the master node or one of the child nodes. The node ending the transmission of the target data packet is the terminal node transmitting the target data packet in the first link. A node between the node initiating the transmission of the target data packet and the node ending the transmission of the target data packet is an intermediate node transmitting the target data packet in the first link. When the target data packet is transmitted in the second link composed of a plurality of nodes, a node initiating the transmission of the target data packet is the master node, and a node ending the transmission of the target data packet may be a child node. The node ending the transmission of the target data packet is a terminal node transmitting the target data packet in the second link.

No upstream node serves as the node initiating the transmission of the target data packet, but the transmission of the target data packet between it and an adjacent node still follows the above streaming data transmission. No downstream node serves as the node ending the transmission of target data packet, but the transmission of the target data packet between its adjacent node and the node ending the transmission of the target data packet still follows the above streaming data transmission.

As an example, as shown in FIG. 6, the transmission system comprises a master node and a plurality of child nodes, and the first link is a ring topology. Taking the transmission of the target data packet from the master node in the first link sequentially through child nodes A, B, C, D, E, F, and G and finally to the master node as an example, when the target node is the child node B, C, D, E, F, or G (the corresponding target node is an intermediate node transmitting the target data packet in the first link), the upstream node is a previous node transmitting the target data packet before the target node, and the downstream node is a next node transmitting the target data packet after the target node. When the target node is the master node (the corresponding target node is the terminal node transmitting the target data packet in the first link), the upstream node is the child node G, and the target node does not have a downstream node.

As an example, as shown in FIG. 7, the transmission system comprises a master node and a plurality of child nodes, and the first link is a linear topology. Taking the transmission of the target data packet from the child node G in the first link sequentially through the master node, child nodes A and B and finally to the child node C as an example, when the target node is the master node, or the child node A or B (the corresponding target node is an intermediate node transmitting the target data packet in the first link), the upstream node is a previous node transmitting the target data packet before the target node, and the downstream node is a next node transmitting the target data packet after the target node. When the target node is the child node C (the corresponding target node is the terminal node transmitting the target data packet in the first link), the upstream node is the child node B, and the target node does not have a downstream node.

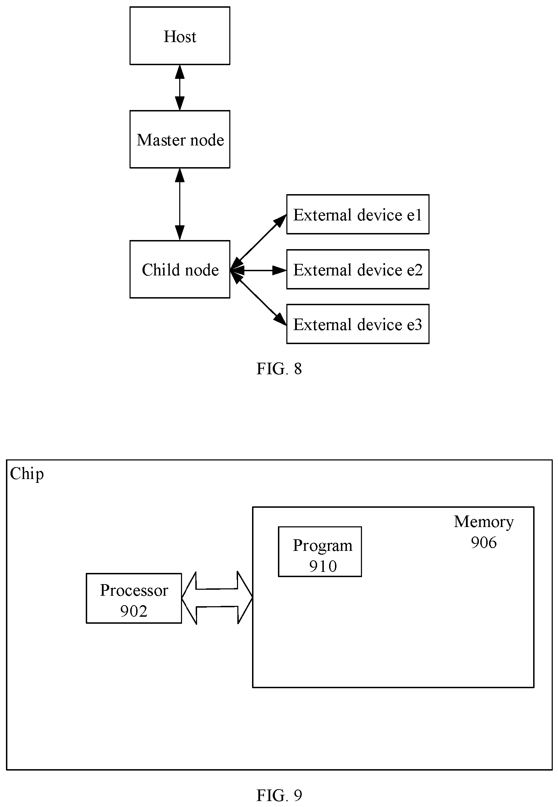

As an example, as shown in FIG. 8, the transmission system comprises a master node and a child node. The master node is connected to the child node to form a second link. In the second link, the target data packet is transmitted from the master node to the child node. The target node is the child node, the upstream node is the master node, and the target node does not have a downstream node.

In FIGS. 6 and 7, the master node and the child nodes A, B, C, D, E, F, and G constitute the first link, with at least some nodes thereof connected to at least one external device, specifically as an example, the child node E is connected to external devices e1, e2, and e3. In FIG. 8, the master node and the child node constitute a second link, with the child node connected to at least one external device, specifically as an example, the child node is connected to external devices e1, e2, and e3. The external device may be, e.g., a Local Interconnect Network (LIN) bus external device, a Pulse Width Modulation (PWM) drive device, an Inter-Integrated Circuit (I2C) bus external device, a Serial Peripheral Interface (SPI) bus external device, a Quad Serial Peripheral Interface (QSPI) bus external device, a General-purpose input/output (GPIO) external device, an Ethernet external device, a Controller Area Network (CAN) bus external device, an external device with a Media Independent Interface (MII) and external devices with various extensions and derivatives of the MII, a Universal Asynchronous Receiver/Transmitter (UATI) external device, a Single Edge Nibble Transmission (SENT) bus external device, an external device supporting Peripheral Sensor Interface 5 (PSIS) protocol, an Inter-IC Sound (I2S) external device, a Time-Division Multiplexing (TDM) external device, an Analog Microphone (AMIC) external device, a Digital Microphone (DMIC) external device, an Analog-to-digital converter (ADC) external device, or a Digital Signal Processor (DSP). The connection mode between the external device and the node depends on a type of the external device. For example, if the external device is a CAN device, the external device is connected to the node through the CAN bus. If the external device is a DSP, the external device may be connected to the node through a bus such as the SPI, UART, or TDM.

It should be noted that the embodiments of the present disclosure do not impose any limitation on the number of nodes and the number of external devices connected to the nodes, and in order to make the schematic diagram as concise and clear as possible, the schematic diagram of the transmission system in an embodiment of the present disclosure only shows external devices namely external devices e1, e2, and e3, connected to a child node.

In an embodiment of the present disclosure, compared to use of a plurality of subsystems corresponding to different bus types in order to transmit a plurality of types of data, use of the above transmission system equipped with the target node and the downstream node can implement mixed transmission of a plurality of types of data through the first link or the second link, so that the transmission system features simple wiring and light weight of the wire harness, which facilitates the assembly and maintenance of the transmission system. In addition, the transmission system transmits data among different nodes through the physical layer, without the need for a MCU and a switch, thereby reducing hardware costs and development and maintenance costs.

When the master node is a node initiating the transmission of the target data packet, the above method for data transmission further comprises: receiving, via the master node, a target data set sent from the host; packetizing, by the master node, the received target data set to obtain a target data packet; and sending the target data packet from the master node to at least one child node, such that the at least one child node processes the external device connected to the at least one child node and/or the local module based on the target data set.

In a specific embodiment, when the master node is a node initiating the transmission of the target data packet, the host is used to send at least one data set to the master node, and the master node packetizes one or more received data sets, thereby obtaining a target data packet with a common header. The target data packet comprises the data set sent from the host. The target data set in the above embodiments is any one data set among the at least one data set sent from the host. In other words, the target data set in the above embodiments is sent from the host to the master node. After the master node receives the target data set, the master node packetizes the target data set to obtain the target data packet with the common header. In other words, a plurality of data sets sent from the host can be packetized into the target data packet in the data format in the above FIG. 2, and then the target data packet is sent to a child node adjacent to the master node. When a plurality of child nodes are present, the target data packet is sequentially transmitted through a plurality of nodes connected to form a first link. When only one child node is present, the transmission of the target data packet is completed through the master node to the child node connected to form a second link. It should be understood that the data transmission between the host and the master node may also follow the above streaming data transmission.

Therefore, when a child node is present in the plurality of nodes, the host can use the master node and the child node to enable the child node to obtain the target data set, thereby remotely controlling the external device connected to the child node or the local module; and when a plurality of child nodes are present in the plurality of nodes, the host can remotely control external devices connected to all of the nodes on the first link or the local module through the first link formed by connecting the master node to the child nodes. Therefore, with this remote control, the child nodes are not required to be configured or connected with an additional MCU, thereby reducing the costs, and improving the efficiency of responding to a control command. In addition, the transmission of the target data packet among the nodes through the above steps 101, 102, and 103 can greatly reduce the data transmission latency and data processing latency, and improve the data transmission efficiency.

### Chip

FIG. 9 is a schematic block diagram of a chip provided in an embodiment of the present disclosure. Specific embodiments of the present disclosure do not impose any limitation on specific implementations of the chip. As shown in FIG. 9, the chip may comprise: a processor 902 and a memory 906, wherein:
the processor 902 and the memory 906 communicate with each other.

The processor 902 is configured to execute a program 910, and specifically can implement relevant steps of the method for data transmission in any one of the above embodiments.

Specifically, the program 910 may comprise a program code. The program code comprises a computer operation instruction.

The processor 902 may be an Application Specific Integrated Circuit (ASIC), or one or more integrated circuits configured to implement embodiments of the present disclosure.

RISC-V is an open-source instruction set architecture based on a reduced instruction set (RISC) principle, can be applied to various aspects such as a single chip microcomputer and a FPGA chip, and can be specifically applied to the fields, such as security of Internet of Things, industrial control, a mobile phone, and a personal computer. Moreover, it is designed based on actual situations such as a small size, a fast speed, and low power consumption, so that it is particularly adapted to a modern computing device, such as a warehouse-scale cloud computer, a high-end mobile phone, and a tiny embedded system. With the emergence of the artificial intelligence Internet of Things (AIoT), the RISC-V instruction set architecture has also attracted more and more attention and support, and is expected to become the next generation of a widely used CPU architecture.

The computer operation instruction in an embodiment of the present disclosure may be a computer operation instruction based on the RISC-V instruction set architecture. Accordingly, the processor 902 may be designed based on the RISC-V instruction set. Specifically, the chip provided in an embodiment of the present disclosure may be a chip designed using the RISC-V instruction set. The chip can execute an executable code based on a configured instruction, thereby implementing the method for data transmission in the above embodiments.

The memory 906 is configured to store the program 910. Optionally, the memory 906 may comprise a high-speed RAM memory, or may further comprise a nonvolatile memory, such as at least one disk memory.

The program 910 may specifically be used for enabling the processor 902 to execute the method for data transmission in any one of the above embodiments.

Corresponding description of the corresponding steps and units of the method for data transmission in any one of the above embodiments may be referred to for specific implementations of the steps in the program 910, which will not be repeated here. Those skilled in the art can clearly understand that, for convenience and simplicity of description, the description of corresponding processes in the above method embodiments may be referred to for specific operating processes of the above-described devices and modules, which will not be repeated here.

With the chip in an embodiment of the present disclosure, in a process of receiving a target data packet, a target node only needs to receive indication data included in a target data set in the target data packet, then starts to cache the indication data, determines whether the indication data satisfies a matching condition, updates the target data set in response to the indication data satisfying the matching condition; and normally receives the target data set in response to the indication data failing to satisfy the matching condition. Therefore, the target data set in the target data packet comprises the indication data. After receiving the indication data, the target node can determine whether the target node needs to update the current target data set simply by determining whether the indication data satisfies the matching condition. In other words, in an actual process of receiving the entire target data set, whether to update the target data set can be determined simply by caching and parsing the indication data in the target data set, without the need to completely cache and parse all data in the entire target data set. After determining to update the target data set, the target node can update the target data set in the process of receiving the target data packet. Compared to the related art whereby the target node can determine whether to update the target data set only after receiving and caching the entire target data packet, and then update the target data set after determining to update the target data set, the target node in the embodiments of the present disclosure can determine whether to update the target data set simply by caching and parsing the indication data, and then update the target data set in the process of receiving the target data packet after determining to update the target data set, without the need to cache data other than the indication data, so as to quickly and efficiently implement data transmission based on the target node, thereby reducing the data transmission latency based on the target node.

### Computer storage medium

The present disclosure further provides a computer-readable storage medium storing an instruction for enabling a machine to execute the method for data transmission as described herein. Specifically, a system or apparatus equipped with a storage medium may be provided, wherein the storage medium stores a software program code for implementing the functions of any one embodiment among the above embodiments, and makes a computer (or CPU or MPU) of the system or the apparatus read and execute the program code stored in the storage medium.

In this case, the program code read from the storage medium itself can implement the functions of any one embodiment among the above embodiments, and thus the program code and the storage medium storing the program code constitute a part of the present disclosure.

Embodiments of storage mediums for providing the program code include a floppy disk, a hard disk, a magneto-optical disk, an optical disk (e.g., CD-ROM, CD-R, CD-RW, DVD-ROM, DVD-RAM, DVD-RW, or DVD+RW), a magnetic tape, a nonvolatile memory card, and a ROM. Optionally, the program code may be downloaded from a server computer through a communication network.

It should be noted that user-related information (including but not limited to user device information, user personal information, etc.) and data (including but not limited to sample data for model training, data for analysis, stored data, displayed data, etc.) involved in the embodiments of the present disclosure are all information and data that are authorized by a user or fully authorized by all parties. Relevant data needs to be collected, used, and processed following relevant laws, regulations, and standards of relevant countries and regions, and be provided with a corresponding operation portal for users to choose or refuse authorization.

As will be appreciated by those of ordinary skills in the art, the various example units and method steps described in combination with the embodiments disclosed herein can be implemented by electronic hardware, or a combination of computer software and electronic hardware. Whether these functions are executed by hardware or software depends on particular applications and design constraints of the technical solutions. Those skilled in the art may implement the described functions for particular applications using different methods, but such implementation should not be considered as falling beyond the scope of the embodiments of the present disclosure.

The above embodiments are only used to illustrate the embodiments of the present disclosure, and are not intended to limit the embodiments of the present disclosure. Those of ordinary skills in the relevant technical field may further make various alterations and modifications without departing from the spirit and scope of the embodiments of the present disclosure. Therefore, all equivalent technical solutions are also encompassed within the scope of the embodiments of the present disclosure, and the scope of patent protection of the embodiments of the present disclosure should be defined by the claims.

## Claims

1. A method for data transmission applied to a target node, comprising:
receiving, in a process of receiving a target data packet, indication data in any one target data set in the target data packet, then determining whether the indication data satisfies a matching condition;
updating the target data set in response to the indication data satisfying the matching condition; and
normally receiving the target data set when the indication data failing to satisfy the matching condition.

2. The method according to claim 1, wherein the target node is an intermediate node among a plurality of nodes used to sequentially transmit data; and
the method further comprises:
sending the updated target data set to a downstream node of the target node after completing the updating the target data set in response to the indication data satisfying the matching condition; and
normally receiving the target data set in response to the indication data failing to satisfy the matching condition, and sending the target data set to the downstream node of the target node.

3. The method according to claim 2, wherein the determining whether the indication data satisfies the matching condition comprises:
determining that the indication data satisfies the matching condition in response to a state indication identifier in the indication data indicating that a data field used to load the target data set is not idle and a node indicated by a node indication identifier in the indication data being the target node;
determining that the indication data fails to satisfy the matching condition in response to the state indication identifier indicating that the data field used to load the target data set is not idle and the node indicated by the node indication identifier in the indication data not being the target node;
determining that the indication data satisfies the matching condition in response to the state indication identifier indicating that the data field used to load the target data set is idle and the target node obtaining to-be-transmitted data from an external device connected to the target node and/or a local module in the target node; and
determining that the indication data fails to satisfy the matching condition in response to the state indication identifier indicating that the data field used to load the target data set is idle and the target node failing to obtain the to-be-transmitted data from the external device and/or the local module.

4. The method according to claim 3, wherein the updating the target data set comprises:
obtaining data in the target data set in response to the state indication identifier indicating that the data field used to load the target data set is not idle, the node indicated by the node indication identifier being the target node, and the target node obtaining the to-be-transmitted data from the external device and/or the local module and after receiving the target data set, replacing main data in the target data set with at least a portion of the to-be-transmitted data, and updating the indication data in the target data set.

5. The method according to claim 3, wherein the updating the target data set comprises:
obtaining data in the target data set in response to the state indication identifier indicating that the data field used to load the target data set is not idle, the node indicated by the node indication identifier being the target node, and the target node failing to obtain the to-be-transmitted data from the external device and/or the local module and after receiving the target data set, and adjusting the state indication identifier in the target data set to indicate that the data field used to load the target data set is idle.

6. The method according to claim 3, wherein the updating the target data set comprises:
generating the updated target data set in the data field used to load the target data set in response to the state indication identifier indicating that the data field used to load the target data set is idle and obtaining the to-be-transmitted data from the external device and/or the local module, wherein main data in the updated target data set is at least a portion of the to-be-transmitted data, and indication data in the updated target data set is determined based on the main data in the updated target data set.

7. The method according to claim 1, wherein the target node is a terminal node among a plurality of nodes used to sequentially transmit data.

8. The method according to claim 7, wherein the determining whether the indication data satisfies the matching condition comprises:
determining that the indication data satisfies the matching condition in response to a state indication identifier in the indication data indicating that a data field used to load the target data set is not idle and a node indicated by a node indication identifier in the indication data being the target node;
determining that the indication data fails to satisfy the matching condition in response to the state indication identifier indicating that the data field used to load the target data set is not idle and the node indicated by the node indication identifier in the indication data not being the target node;
determining that the indication data fails to satisfy the matching condition in response to the state indication identifier indicating that the data field used to load the target data set is idle.

9. The method according to claim 8, wherein the updating the target data set comprises:
obtaining data in the target data set in response to the state indication identifier indicating that the data field used to load the target data set is not idle and the node indicated by the node indication identifier being the target node and after receiving the target data set, and adjusting the state indication identifier in the target data set to indicate that the data field used to load the target data set is idle.

10. The method according to claim 8, wherein the updating the target data set comprises:
obtaining the data in the target data set in response to the state indication identifier indicating that the data field used to load the target data set is not idle and the node indicated by the node indication identifier being the target node and after receiving the target data set.

11. The method according to claim 4, 5, 9, or 10, wherein the method further comprises:
obtaining preprocessing information corresponding to the main data in the target data set from the target node after obtaining the data in the target data set;
preprocessing the external device connected to the target node and/or the local module in the target node based on the preprocessing information; and
processing the external device and/or the local module based on non-preprocessing information in the main data, wherein the main data does not comprise the preprocessing information.

12. The method according to claim 11, wherein the obtaining the preprocessing information corresponding to the main data in the target data set from the target node comprises:
determining a to-be-processed object of the non-preprocessing information in the target data set, wherein the to-be-processed object comprises at least a portion of the external device and/or at least a portion of the local module; and
locally obtaining the preprocessing information corresponding to the to-be-processed object from the target node as the preprocessing information corresponding to the main data in the target data set, wherein preprocessing information corresponding to the external device and the local module is obtained after the target node is powered on and is stored locally in the target node.

13. The method according to claim 4, 5, 9, or 10, wherein the method further comprises:
obtaining preprocessing information corresponding to each external device connected to the target node and preprocessing information corresponding to the local module in the target node from the target node;
preprocessing the external device based on the preprocessing information corresponding to the external device;
preprocessing the local module based on the preprocessing information corresponding to the local module; and
processing the external device and/or the local module based on non-preprocessing information in the main data in the target data set after obtaining the data in the target data set, wherein the main data does not comprise the preprocessing information.

14. The method according to any one of claims 1-10, wherein the method is implemented based on a physical layer of the target node, wherein the physical layer is a bottom layer in network communication.

15. The method according to claim 14, wherein the target data packet is sent from a physical layer of an upstream node of the target node to the physical layer of the target node through a first transmission medium, wherein the first transmission medium is a physical transmission medium.

16. The method according to claim 15, wherein the method further comprises:
performing verification on the target data packet through the physical layer of the target node after reception of the target data packet is completed;
sending, when the verification of the target data packet succeeds, an acknowledgment message corresponding to the target data packet to the physical layer of the upstream node of the target node through the first transmission medium; and
uploading corresponding abnormality information when the verification of the target data packet fails.

17. The method according to claim 16, wherein the method further comprises:
re-sending, when the target node is the intermediate node among the plurality of nodes used to sequentially transmit data and when, after a first waiting duration from sending the target data packet to a physical layer of the downstream node of the target node, the acknowledgment message sent for the target data packet from the physical layer of the downstream node fails to be received, the target data packet to the physical layer of the downstream node.

18. The method according to claim 17, wherein the method further comprises:
discarding the target data packet when the target node is the intermediate node among the plurality of nodes used to sequentially transmit data and the acknowledgment message sent for the target data packet from the physical layer of the downstream node fails to be received after a second waiting duration from sending the target data packet to the physical layer of the downstream node, and uploading corresponding abnormality information, wherein the second waiting duration is longer than the first waiting duration.

19. The method according to claim 18, wherein the method further comprises:
when the target node is the intermediate node among the plurality of nodes used for sequentially transmitting data and the acknowledgment message sent for the target data package from the physical layer of the downstream node is received within the second waiting duration verifying the acknowledgment message through the physical layer of the target node starting from the time when the target data packet is sent to the physical layer of the downstream node;
when the verification of the acknowledgment message succeeds, deleting the target data packet; and
when the verification of the acknowledgment message fails, discarding the target data packet , and uploading corresponding abnormality information.

20. The method according to claim 15, wherein the method further comprises:
when a first data packet of which receipt is started overlapping with any one data packet of which reception is completed in a process of receiving a plurality of data packets by the physical layer of the target node, deleting the first data packet after the receiving the first data packet is completed, wherein the target data packet is any one data packet among the plurality of data packets.

21. The method according to claim 15, wherein the method further comprises:
exceptionally receiving, when receipt of a third data packet is started after a second data packet is normally received in a process of receiving a plurality of data packets by the physical layer of the target node and the third data packet not being a next data packet to the second data packet among the plurality of data packets, the third data packet, to cache the third data packet and not to process the third data packet, wherein the target data packet is any one data packet among the plurality of data packets.

22. The method according to claim 1, wherein the target node is applied to a transmission system, the transmission system comprises a plurality of nodes, and the plurality of nodes comprise a master node and at least one child node; wherein
the plurality of nodes are sequentially connected to form a first link in response to at least two child nodes being present among the plurality of nodes, the first link is a ring topology or a linear topology, and the target node is an intermediate node or a terminal node transmitting the target data packet in the first link; and
the master node is, in response to a child node being present among the plurality of nodes, connected to the child node to form a second link, the child node is a terminal node transmitting the target data packet in the second link, and the target node is the child node.

23. A chip, comprising: a processor and a memory, wherein the processor and the memory communicate with each other; and
the memory is configured to store at least one executable instruction, and the executable instruction enables the processor to implement operations corresponding to the method according to any one of claims 1-22.

24. A computer storage medium, storing a computer program thereon, wherein the program, when executed by a processor, implements the method according to any one of claims 1-22.
